# EUROPÄISCHE PATENTSCHRIFT

(11) **EP 3 669 150 B1**
(45) Veröffentlichungstag und Bekanntmachung des Hinweises auf die Patenterteilung: **13.10.2021**
(21) Anmeldenummer: 18753157.9
(22) Anmeldetag: 09.08.2018
(51) Int. Cl.: G01K 7/20

(54) **TEMPERATURSENSORSCHALTUNG**
TEMPERATURE SENSOR CIRCUIT
CIRCUIT DE CAPTURE DE TEMPÉRATURE

(30) Priorität: 15.08.2017 DE 102017214214
(43) Veröffentlichungstag der Anmeldung: 24.06.2020
(73) Patentinhaber: Robert Bosch GmbH, 70442 Stuttgart (DE)
(72) Erfinder: TRUNK, Martin, 74196 Neuenstadt (DE)
(86) Internationale Anmeldenummer: PCT/EP2018/071582
(87) Internationale Veröffentlichungsnummer: WO 2019/034508

(56) Entgegenhaltungen:
- GB-A- 197 072

## Beschreibung

Aktuell wird die Temperatur einer elektrischen Maschine üblicherweise mit Hilfe eines NTC-Widerstands [NTC = negative temperature coefficient] gemessen. Üblicherweise bildet der NTC-Widerstand dabei mit einem Festwiderstand (oft in einer Sensoranordnung auch Spannungsteilerwiderstand genannt) einen Spannungsteiler. Der heruntergeteilte Spannungswert über den NTC-Widerstand wird in einen Analog-Digital-Wandler in ein digitales Signal umgewandelt und dazu genutzt, eine Temperatur zu berechnen. Bei Bedarf wird der Widerstandswert des Festwiderstands bzw. des Spannungsteilwiderstandes umgeschaltet, um den Messbereich aufzuweiten oder um über einen vergrößerten Temperaturmessbereich plausible und diagnostizierbare Temperaturwerte zu erhalten. Weiterhin sind zusätzliche Schutzbeschaltungen notwendig, um den NTC-Widerstand (bzw. die gesamte Temperatursensoranordnung) vor Überlastung zu schützen. Insbesondere ist ein Kurzschlussschutz notwendig.

Das Dokument GB 197 072 A offenbart einen verbesserten Temperatursensor mit einem elektrischen Messwiderstand.

Hier beschrieben werden soll eine verbesserte Temperatursensorschaltung, die insbesondere eine einfache Auswertung der Messergebnisse des Temperatursensors ermöglicht und welche einen guten Schutz des Temperatursensors und der Temperatursensorschaltung vor Überlastung im Betrieb und im Fehlerfall ermöglicht. Gleichzeitig wird eine hohe Temperaturmessgenauigkeit erreicht.

### Offenbarung der Erfindung

Hier beschrieben werden soll eine Temperatursensorschaltung zur Messung einer Temperatur umfassend einen Messwiderstand und eine an den Messwiderstand angeschlossene steuerbare Spannungsquelle oder Stromquelle, mit welcher der Messwiderstand mit einer Eingangsspannung beaufschlagt werden kann, wobei die Eingangsspannung mit der steuerbaren Spannungsquelle oder Stromquelle stufenlos eingestellt werden kann.

Hier sind zwei verschiedene Varianten angegeben, mit welchen die Eingangsspannung gesteuert werden kann. Dies kann entweder mit einer steuerbaren Spannungsquelle geschehen, mit welcher die Eingangsspannung unmittelbar gesteuert wird. Alternativ kann dies mit einer steuerbaren Stromquelle geschehen, mit welcher die Eingangsspannung indirekt eingestellt werden kann indem der bereitgestellte Strom gezielt so angepasst wird, dass sich eine gewünschte Eingangsspannung ergibt. Beide Varianten (mit Spannungsquelle oder mit Stromquelle) sind hier unabhängig voneinander offenbart. Wenn im Folgenden von einer Spannungsquelle die Rede ist, dann kann alternativ immer auch eine entsprechend eingerichtete Stromquelle verwendet werden.

Bevorzugt weist die Temperatursensorschaltung weiter einen Spannungsteilerwiderstand auf, mit welchem der Messwiderstand in Serie geschaltet ist.

Die Temperatursensorschaltung dient insbesondere dazu eine Temperatur zu bestimmen bzw. zu messen.

Besonders bevorzugt ist der Messwiderstand der Temperatursensorschaltung sowohl Richtung Spannungsquelle als auch Richtung zu einer Bezugsmasse nicht niederohmig angeschlossen. Ein hochohmiger (nicht niederohmiger) Anschluss des Messwiderstandes in Richtung zur Spannungsquelle ist bevorzugt durch einen inneren Widerstand in der Spannungsquelle (der ggf. gleichzeitig als Dämpfungswiderstand wirkt) realisiert. Ein hochohmiger (nicht niederohmiger) Anschluss des Messwiderstandes in Richtung zu einer Bezugsmasse wird bevorzugt durch den Spannungsteilerwiderstand realisiert.

Die hochohmigen Anschlüsse des Messwiderstandes durch den inneren Widerstand der Spannungsquelle und den Spannungsteilerwiderstand begrenzen im Falle eines Kurzschlusses des Messwiderstandes bzw. der Temperatursensorschaltung den Kurzschlussstrom. Durch diese Widerstände wird der Temperatursensor vor Zerstörung geschützt.

Durch die variable Versorgungsspannung kann die Temperatursensorschaltung immer in ihrem optimalen Betriebspunkt bzw. bei einem spezifizierten Nennstrom betrieben werden. Dies erhöht die Messgenauigkeit.

Es ist nicht nur eine Umschaltung eines Widerstandswerts in einen anderen Messbereich möglich, sondern mit Hilfe der steuerbaren Spannungsquelle können der Messbereich und die Messgenauigkeit der Temperatursensorschaltung stufenlos eingestellt werden. Toleranzbedingte Sprünge, die sich bei einer Umschaltung zwischen verschiedenen Messbereichen einer gestuft verstellbaren Temperatursensorschaltung ergeben, können vermieden werden.

Ein variables Nachführen bzw. Ändern der Spannungsversorgung bzw. der steuerbaren Spannungsquelle ist möglich. Durch ein Umschalten zwischen verschiedenen Messbereichen verursachte Sprünge können vermieden werden.

Die steuerbare Spannungsquelle ist (wie beschrieben) insbesondere dazu geeignet, eine variable Spannungsversorgung bereitzustellen. Die steuerbare Spannungsquelle kann insbesondere dazu genutzt werden, den durch den Sensor hindurchfließenden Strom gezielt derart zu variieren, dass die Eigenerwärmung des Sensors verringert wird.

Der Messwiderstand der Temperatursensorschaltung ist bevorzugt ein NTC-Widerstand. [NTC = negative temperature coefficient]. Der Begriff "Eingangsspannung" bezeichnet die Spannung, die mit der steuerbaren Spannungsquelle auf den Temperatursensor aufgegeben wird. Der Messwiderstand kann grundsätzlich auch ein PTC-Widerstand [PTC = positive temperature coefficient] sein.

Besonders bevorzugt ist, wenn an einem ersten Ende des Messwiderstandes ein erster Anschluss zur Abnahme einer ersten Messspannung ist. Das erste Ende des Messwiderstandes ist bevorzugt das Ende, an dem auch die steuerbare Spannungsquelle angeschlossen ist.

Außerdem bevorzugt ist, wenn an einem zweiten Ende des Messwiderstandes ein zweiter Anschluss zur Abnahme einer zweiten Messspannung ist. Das zweite Ende des Messwiderstandes ist bevorzugt das Ende, an dem auch die Bezugsmasse angeschlossen ist.

Die Temperatursensorschaltung mit einem ersten Anschluss zur Abnahme einer ersten Messspannung und einem zweiten Anschluss zur Abnahme einer zweiten Messspannung hat den Vorteil, dass eine Differenzmessung zur Bestimmung einer über den Messwiderstand auftretenden Differenzspannung besonders präzise möglich ist.

Besonders bevorzugt ist, wenn an mindestens einem Anschluss der Temperatursensorschaltung zur Abnahme einer Messspannung ein Analog-Digital-Wandler angeschlossen ist, mit welchem eine Messspannung in ein digitales Spannungssignal umgewandelt werden kann. Mit einem Analog-Digital-Wandler ist eine Umwandlung eines Spannungssignals in ein digitales Signal möglich. Ein digitales Signal kann digital weiter verarbeitet werden.

Außerdem bevorzugt ist ein Stromsensor mit dem Messwiderstand in Serie geschaltet, um einen elektrischen Strom zu messen, der durch den Messwiderstand fließt. Die Kenntnis des elektrischen Stroms, der durch den Messwiderstand fließt, ermöglicht es, zusammen mit auftretenden Messspannungen (erste Messspannung und/oder zweite Messspannung) die elektrische Energie zu bestimmen, die von dem Messwiderstand umgesetzt wird, und die Wärme erzeugt.

Ein Stromsensor kann bevorzugt ein Spannungsteilerwiderstand oder ein Festwiderstand sein über welchen ein fließender Strom gemessen werden kann.

Außerdem weist die Temperatursensorschaltung eine Auswertungsschaltung auf, welche dazu eingerichtet ist, die steuerbare Spannungsquelle in Abhängigkeit einer von der Temperatursensorschaltung Eingangsgröße zu regeln, um eine Anpassung der Eingangsspannung an die Eingangsgröße zu erreichen.

Die Eingangsgröße ist insbesondere die von der Temperatursensorschaltung gemessene Temperatur bzw. die mit der Temperatursensorschaltung bestimmte Temperatur. Die Eingangsgröße kann aber auch jede beliebige andere Eingangsgröße sein, die mit der Temperatursensorschaltung bzw. in der Temperatursensorschaltung bestimmt wird und die eine Auswirkung auf die Erwärmung der Temperatursensorschaltung bzw. des Messwiderstandes hat. Die Eingangsgröße kann insbesondere ein mit einem Stromsensor gemessener elektrischer Strom oder ein auf Basis dieses elektrischen Stroms bestimmter Wert sein. Ein solcher auf Basis des elektrischen Stroms bestimmter Wert ist beispielsweise eine elektrische Leistung oder eine elektrische Energie, die durch den elektrischen Strom bewirkt wird und die zur Erwärmung des Messwiderstandes bzw. der Temperatursensorschaltung beiträgt.

Besonders bevorzugt weist die steuerbare Spannungsquelle ein PWM-Modul auf, welches an einen Dämpfungswiderstand und einen Kondensator angeschlossen ist, um aus einer konstanten Versorgungsspannung die Eingangsspannung zu erzeugen, wobei die Eingangsspannung durch eine Vorgabe einer Pulsweite für das PWM-Modul geregelt wird.

Das PWM-Modul [PWM = pulse width modulation] ermöglicht es, Spannung auf mindestens zwei verschiedenen Spannungsniveaus bereit zu stellen. Üblicherweise existiert ein erhöhtes Spannungsniveau und ein Grundspannungsniveau. In bevorzugten Ausführungsvarianten ist das Grundspannungsniveau null. Es sind aber auch Ausführungsvarianten möglich, bei denen das Grundspannungsniveau von null verschieden ist. Aufgrund des erhöhten Spannungsniveaus stellt sich üblicherweise auch ein erhöhter Messstrom durch die Temperatursensorschaltung (insbesondere durch den Messwiderstand) ein, der insbesondere gegenüber dem bei anliegendem Grundspannungsniveau fließenden Strom erhöht ist.

Bei einem höheren Spannungsniveau und einem erhöhten Messstrom durch den Messwiderstand ist insbesondere eine erhöhte Genauigkeit der Temperaturmessung möglich, weil bereits kleine Temperaturunterschiede bei erhöhtem Messstrom zu erhöhten Spannungsunterschieden über den Messwiderstand führen.

Es ist besonders bevorzugt, wenn mittels des PWM-Moduls der für eine hohe Messgenauigkeit notwendige erhöhte Strom nur gepulst eingestellt wird. Dann tritt auch nur kurzzeitig (während den Phasen des erhöhten Messstroms) eine verstärkte Erwärmung des Messwiderstandes auf. Die Erwärmung des Messwiderstandes und der Temperatursensorschaltung kann so bei hoher Messgenauigkeit insgesamt reduziert werden. Durch die variable Spannungsversorgung kann der Sensor immer in einem plausiblen Bereich betrieben werden und eine präzise Temperaturbestimmung ist jederzeit möglich. Die hier beschriebene Temperatursensorschaltung zeichnet sich also dadurch aus, dass ein Temperatursensor mit der Eigenschaft eines temperaturabhängigen Widerstands an einer variablen Spannungsversorgung betrieben wird. Weiterhin zeichnet sich diese Temperatursensorschaltung dadurch aus, dass der durch den Temperatursensor hindurchfließende Strom gemessen wird. Weiterhin zeichnet sich diese Temperatursensorschaltung dadurch aus, dass die am Temperatursensor abfallende Spannung gemessen wird (z. B. durch Differenzbildung der an zwei Anschlüssen gemessenen Spannungen).

Es ist darauf hinzuweisen, dass die Reihenfolge der verschiedenen Elemente der Temperatursensorschaltung (Messwiderstand, Spannungsteilerwiderstand, Dämpfungswiderstand und Stromsensor) beliebig sind. Wichtig ist nur, dass diese Komponenten in Serie zueinander zwischen einer Bezugsmasse und der steuerbaren Spannungsquelle geschaltet sind.

Die Temperatursensorschaltung zeichnet sich insbesondere auch dadurch aus, dass der durch die Temperatursensorschaltung hindurchfließende Strom durch Pulsen der variablen Spannungsversorgung derart eingestellt wird, dass die Eigenerwärmung des Sensors verringert und die Messgenauigkeit erhöht wird.

Insbesondere wird der durch die Temperatursensorschaltung hindurchfließende Strom derart eingestellt, dass die Temperatursensorschaltung im optimalen oder spezifizierten Betriebspunkt betrieben wird.

Durch Variation der Spannungsversorgung kann die Temperatursensorschaltung kalibriert werden bzw. Messfehler können reduziert werden. Z.B. kann durch das Einstellen unterschiedlicher Spannungen bei gleicher Temperatur ein Quantisierungsfehler eines Analog-Digital-Wandlers teilweise herausgerechnet werden.

Die variable Spannungsversorgung (die von der steuerbaren Spannungsquelle erzeugt wird) kann durch einen PWM-Ausgang eines Mikrokontrollers mit nachgeschaltetem Tiefpass umgesetzt werden. Der Tiefpass führt dazu, dass der gepulste Strom bzw. die gepulste Spannung, die den Ausgang des PWM-Moduls bildet, geglättet wird bzw. zu einem konstanten Spannungs- und Stromniveau umgewandelt wird. Das Verhältnis von spannungslosen Zeitintervallen zu Zeitintervallen in denen an dem PWM-Ausgang eine Spannung anliegt, ist üblicherweise proportional zu dem Verhältnis von Spannungseingang und Spannungsausgang des Tiefpasses. Der Tiefpass ist bevorzugt durch einen Dämpfungswiderstand und einen Kondensator gebildet. Die Spannungshöhe am Ausgang der Dämpfungsschaltung ergibt sich somit aus dem Duty Cycle des PWM Signals. Andere Ansteuerverfahren wie feste Ein- und variable Auszeiten sind auch möglich, um eine variable Spannung mit der steuerbaren Spannungsquelle zu erzeugen.

Gegenüber einer Temperatursensorschaltung mit einem umschaltbaren Spannungsteiler hat die hier beschriebene Temperatursensorschaltung den Vorteil, dass die Auswerteschaltung stufenfrei und somit kontinuierlich auf den optimalen Auswertebereich des Sensors hin verändert werden kann.

Der Sensor wird nicht wie bisher mit einer Konstantspannungsquelle und einem (ggf. umschaltbaren) Spannungsteiler betrieben, sondern von einer variablen Spannungsquelle versorgt.

Hier auch beschrieben werden soll ein Verfahren zur Durchführung einer Temperaturmessung mit einer beschriebenen Temperatursensorschaltung, aufweisend die folgenden Schritte:
a) Bereitstellen eines Messstroms, der für die Temperaturmessung durch den Messwiderstand strömt,
b) Bereitstellen eines erhöhten Messstroms, der für die Temperaturmessung durch den Messwiderstand strömt in zumindest einem begrenzten Zeitintervall,
c) Bereitstellung eines Messsignals der Temperaturmessung, wobei für die Temperaturmessung während des begrenzten Zeitintervalls aus Schritt b) eine erhöhte Messgenauigkeit angenommen wird.

Der Schritt a) findet bevorzugt kontinuierlich statt. Der gemäß Schritt a) bereitgestellte Messstrom wird insbesondere dadurch bereitgestellt, dass die steuerbare Spannungsquelle eine bestimmte Grundspannung erzeugt. Der Schritt b) erfolgt bevorzugt gepulst bzw. wiederholt während Schritt a) mit der steuerbaren Spannungsquelle. Bevorzugt wird der erhöhte Messstrom durch eine erhöhte Spannung erzeugt, die von der steuerbaren Spannungsquelle bereitgestellt wird. Wenn die steuerbare Spannungsquelle ein PWM-Modul aufweist, kann die Erhöhung der Spannung und des Messstroms beispielsweise durch eine Verlängerung der Spannungspulse des PWM-Betriebs erfolgen. Alternativ kann auch die Wiederholfrequenz von Spannungspulsen erhöht werden, um in Schritt b) einen erhöhten Messstrom bereitzustellen.

Die Annahme der erhöhten Messgenauigkeit (Schritt c)) der Temperaturmessung während des zumindest einen begrenzten Zeitintervalls (Schritt b)) erfolgt insbesondere, indem gemessene Temperaturwerte während des begrenzten Zeitintervalls bevorzugt berücksichtigt werden. Bevorzugt werden während des begrenzten Zeitintervalls gemessene Temperaturwerte direkt bereitgestellt. Temperaturwerte, die außerhalb des begrenzten Zeitintervalls gemessen werden, werden bevorzugt in geringerem Maße berücksichtigt. Besonders bevorzugt werden die Temperaturmessungen während des begrenzten Zeitintervalls genutzt, um Temperaturmessungen außerhalb des begrenzten Zeitintervalls zu validieren und zu korrigieren. Außerhalb des begrenzten Zeitintervalls werden bevorzugt nur mit einem Filter kalibrierte Temperaturwerte bereitgestellt, wobei ein solcher Filter mit Hilfe von Temperaturwerten erstellt wird, die während des begrenzten Zeitintervalls ermittelt wurden. Dieser Filter kann beispielsweise nach Art eines Tiefpasses ausgeführt werden, der in dem begrenzten Zeitintervall immer auf einen Ausgangswert kalibriert wird, von dem ausgehend Temperaturänderungen in Zeiträumen außerhalb des begrenzten Zeitintervalls nur gefiltert (abgeschwächt) berücksichtigt werden.

Schritt c) wird insbesondere in einem Teil der Temperatursensorschaltung durchgeführt. An einem Ausgang der Temperatursensorschaltung wird bevorzugt kontinuierlich (während des begrenzten Zeitintervalls und außerhalb des begrenzten Zeitintervalls) ein Temperaturwert ausgegeben.

Besonders bevorzugt ist das Verfahren, wenn es zusätzlich folgende Schritte umfasst:
d) Erkennen einer Sensorerwärmung in Folge des Messstroms,
e) Regeln von zumindest einem der folgenden Parameter in Abhängigkeit der in Schritt d) erkannten Erwärmung:
   - Stromstärke des erhöhten Messstroms in Schritt b),
   - Stromstärke des Messstroms in Schritt a),
   - Länge des begrenzten Zeitintervalls in Schritt b), und
   - Wiederholrate von Schritt b).

Die Erkennung der Sensorerwärmung in Schritt d) erfolgt bevorzugt indirekt. Der durch den Messwiderstand fließende Strom wird mit einem Stromsensor der Temperatursensorschaltung bestimmt. Aus dem fließenden Strom kann auf eine Menge an Wärmeenergie geschlossen werden, die in den Sensor eingebracht wird. Gegebenenfalls hängt die Menge an in den Sensor eingebrachter Wärmeenergie auch noch von Spannungen ab, die an den Anschlüssen der Temperatursensorschaltung auftreten, wenn ein Messstrom durch den Messwiderstand fließt. Gegebenenfalls kann aus dem gemessenen Strom und den Spannungen zunächst die auftretende Sensorerwärmung berechnet werden. Diese berechnete auftretende Sensorerwärmung wird dann anschließend für die Regelung in Schritt e) verwendet. Gegebenenfalls ist es auch möglich, dass der Messstrom und ggf. die auftretenden Spannungen an den Anschlüssen direkt für die Regelung in Schritt e) verwendet werden. Die Erkennung der Sensorerwärmung in Folge des Messstroms erfolgt dann implizit.

Durch die genannten Parameter (Stromstärke des Messstroms, Stromstärke des erhöhten Messstroms, Länge des begrenzten Zeitintervalls und Wiederholrate von Schritt b))kann die Sensorerwärmung gezielt gesteuert werden. Um die Sensorerwärmung zu reduzieren, erfolgt insbesondere eine Reduzierung von Stromstärke, Länge des begrenzten Zeitintervalls und/oder der Wiederholrate. Um die Sensorerwärmung zu verstärken, erfolgt insbesondere eine Steigerung der Stromstärke, der Länge des begrenzten Zeitintervalls und/oder der Wiederholrate.

Für die Regelung in Schritt e) wird insbesondere auch die aktuell mit der Temperatursensoranordnung bestimmte bzw. gemessene Temperatur bestimmt. Eine Eigenerwärmung der Temperatursensorschaltung durch den Messstrom kann mit der Regelung in Schritt e) verhindert werden.

Hier auch beschrieben werden soll ein Computerprogramm, welches zur Durchführung des beschriebenen Verfahrens (insbesondere unter Verwendung der beschriebenen Temperatursensorschaltung) eingerichtet ist. Das Computerprogramm ist insbesondere dazu eingerichtet, auf einem Steuergerät ausgeführt zu werden, an welches die Temperatursensorschaltung angeschlossen ist.

Darüber hinaus soll hier ein Datenträger mit einem solchen Computerprogramm beschrieben werden. Auf dem Datenträger ist das Computerprogramm gespeichert und bereitgestellt.

Die beschriebene Temperatursensorschaltung wird nachfolgend anhand der Figuren näher erläutert. Es ist darauf hinzuweisen, dass die Figuren nur schematisch sind bzw. besondere Ausführungsvarianten der Erfindung zeigen.
- Fig. 1:: eine Prinzipskizze einer beschriebenen Temperatursensorschaltung,
- Fig. 2:: eine beispielhafte Umsetzung einer beschriebenen Temperatursensorschaltung,
- Fig. 3:: ein zeitliches Ablaufdiagramm einer Temperaturmessung mit einer beschriebenen Temperatursensorschaltung, und
- Fig. 4:: ein Ablaufdiagramm der Verfahrensschritte des beschriebenen Verfahrens

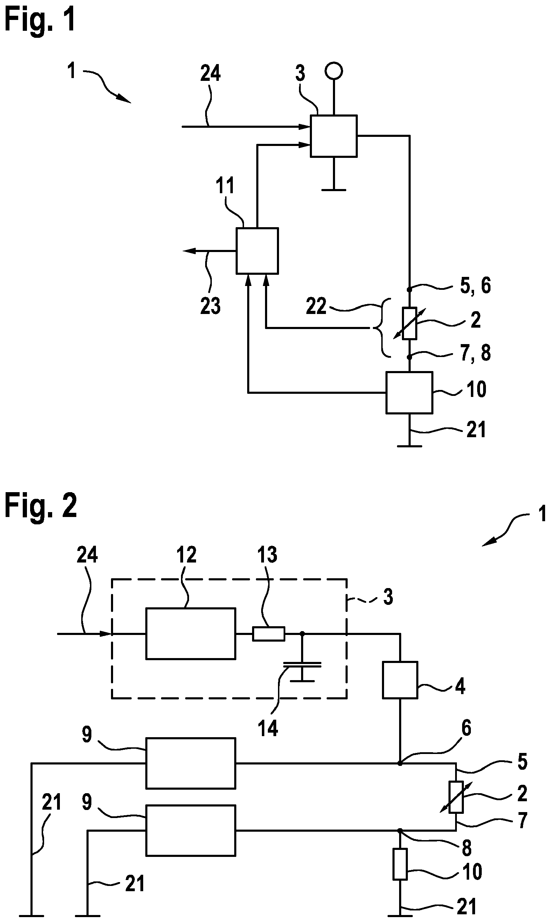

Die Fig. 1 und die Fig. 2 zeigen zusammen das Prinzip der beschriebenen Temperatursensorschaltung 1, wobei Fig. 1 eine Prinzipskizze zeigt und Fig. 2 die elektronischen Komponenten der Temperatursensorschaltung 1 verdeutlicht.

In Fig. 1 zu erkennen ist, dass der Messwiderstand 2 der Temperatursensorschaltung 1 zwischen einer steuerbaren Spannungsquelle 3 und einem Bezugspotential 21 geschaltet ist. Über den Messwiderstand 2 stellt sich bei einem fließenden Messstrom ein Spannungsabfall 22 ein, der zwischen einem ersten Anschluss 6 an einem ersten Ende 5 des Messwiderstandes 2 und einem zweiten Anschluss 8 an einem zweiten Ende 7 des Messwiderstandes 2 abgenommen werden kann und welcher an eine Auswerteschaltung 11 übergeben wird, welche hieraus ein Ausgangssignal 23 erzeugt, welches die von der Temperatursensorschaltung 1 ermittelte Temperatur repräsentiert. Die steuerbare Spannungsquelle 3 kann bevorzugt von der Auswerteschaltung 11 geregelt werden. Die steuerbare Spannungsquelle 3 wird von der Auswerteschaltung 11 bevorzugt so geregelt, dass keine oder nur eine die Temperaturmessung nicht negativ beeinflussende Erwärmung der Temperatursensorschaltung 1 in Folge des Messstroms erfolgt. Die steuerbare Spannungsquelle 3 ist dazu eingerichtet, aus einer bereitgestellten Bordnetzspannung 24 eine reduzierte Spannung für die Temperaturmessung zu erzeugen. Um den anliegenden Messstrom zu ermitteln, ist mit dem Messwiderstand 2 in Serie auch noch ein Stromsensor 10 geschaltet, der ein Stromsignal an die Auswerteschaltung 11 abgibt.

In Fig. 2 sind einige elektrische Komponenten der Temperatursensorschaltung 1 im Detail dargestellt, die so aus Fig. 1 nicht zu entnehmen sind. Detaillierter dargestellt ist beispielsweise die steuerbare Spannungsquelle 3, welche ein ansteuerbares PWM-Modul 12 sowie eine Glättungsschaltung bestehend aus einem Dämpfungswiderstand 13 und einem Kondensator 14 umfasst. Durch diese Glättungsschaltung wird aus einem Rechteck-Spannungssignal an einem Ausgang des PWM-Moduls 12 ein gleichmäßiges Spannungssignal mit reduzierter Spannung. In Fig. 2 außerdem zu erkennen ist ein Spannungsteilerwiderstand 4, der mit dem Messwiderstand 2 in Serie geschaltet ist. In Fig. 2 außerdem zu erkennen sind Analog-Digital-Wandler 9, die an dem ersten Anschluss 6 und dem zweiten Anschluss 8 angeschlossen sind und die dazu dienen, analoge Spannungssignale an dem ersten Anschluss 6 und an dem zweiten Anschluss 8 für die weitere Auswertung zu digitalisieren. Zusätzlich ist in Fig. 2 auch der Stromsensor 10 dargestellt. Der Stromsensor 10 kann beispielsweise mit einem Festwiderstand realisiert sein, der auf dem gleichen Bezugsmasse 21 liegt wie der oder die Analog-Digital-Wandler 9. Mit diesem Festwiderstand 4 kann der Strom durch den Messwiderstand 2 bestimmt werden. Ein separater Stromsensor 10 ist dann nicht erforderlich.

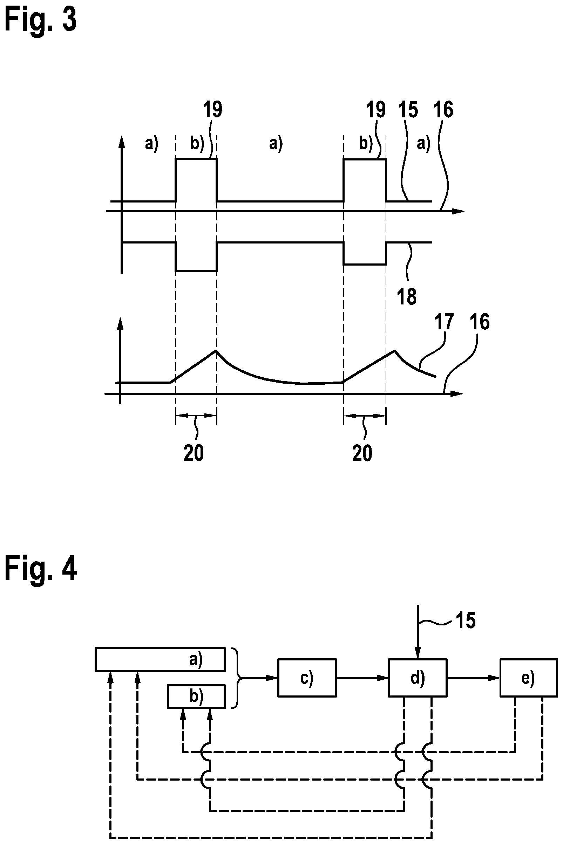

Fig. 3 zeigt ein zeitliches Ablaufdiagramm einer Temperaturmessung. Zu erkennen sind über eine Zeitachse Phasen mit einem erhöhten Messstrom 19 (Schritt b)) und Phasen mit einem nicht erhöhten Messstrom 15 (Schritt a)). Der in dem Diagramm ebenfalls schematisch aufgetragene Messfehler 18 der Temperaturmessung ist in den Phasen gemäß Schritt b) geringer als in den Phasen gemäß Schritt a). Allerdings tritt in den Phasen gemäß Schritt b) eine verstärkte Sensorerwärmung 17 auf. Die Sensorerwärmung 17 soll insgesamt reduziert werden. Daher erfolgt nicht permanent die Messung gemäß Schritt b).

Fig. 4 verdeutlicht die Verfahrensschritte einer Temperaturmessung a) bis e). Schematisch angedeutet ist, dass die Verfahrensschritte a) und b) zeitlich versetzt oder gegebenenfalls auch parallel zueinander stattfinden. Sowohl während Schritt a) als auch während Schritt b) erfolgt die Bereitstellung eines Messsignals (Schritt c)), wobei dieses Messsignal jedoch während Schritt b) eine höhere Genauigkeit hat als während Schritt a). Anhand des Messsignals und anhand eines auftretenden Messstroms 15 erfolgt in Schritt d) eine Abschätzung einer Sensorerwärmung. Mit Schritt e) wird in Abhängigkeit der abgeschätzten Sensorerwärmung das Verfahren (insbesondere die Durchführung der Verfahrensschritte a) und b)) gesteuert.

## Patentansprüche

1. Temperatursensorschaltung (1) zur Messung einer Temperatur umfassend einen Messwiderstand (2) und eine an den Messwiderstand (2) angeschlossene steuerbare Spannungsquelle (3) oder Stromquelle (3), mit welcher der Messwiderstand (2) mit einer Eingangsspannung beaufschlagt werden kann, wobei die Eingangsspannung mit der steuerbaren Spannungsquelle (3) oder Stromquelle (3) stufenlos eingestellt werden kann,
**dadurch gekennzeichnet, dass**
der durch die Temperatursensorschaltung hindurchfließende Strom durch Pulsen der variablen Spannungsversorgung derart eingestellt wird, dass die Eigenerwärmung des Sensors verringert und die Messgenauigkeit erhöht wird.

2. Temperatursensorschaltung (1) nach Anspruch 1 weiter aufweisend einen Spannungsteilerwiderstand (4) mit welchem der Messwiderstand (2) in Serie geschaltet ist.

3. Temperatursensorschaltung (1) nach einem der vorhergehenden Ansprüche, wobei an einem ersten Ende (5) des Messwiderstandes (2) ein erster Anschluss (6) zur Abnahme einer ersten Messspannung ist.

4. Temperatursensorschaltung (1) nach einem der vorhergehenden Ansprüche, wobei an einem zweiten Ende (7) des Messwiderstandes (2) ein zweiter Anschluss (8) zur Abnahme einer zweiten Messspannung ist.

5. Temperatursensorschaltung (1) nach Anspruch 3 oder 4, wobei an mindestens einen Anschluss (6, 8) zur Abnahme einer Messspannung ein Analog-Digital-Wandler (9) angeschlossen ist, mit welchem eine Messspannung in ein digitales Spannungssignal umgewandelt werden kann.

6. Temperatursensorschaltung (1) nach einem der vorhergehenden Ansprüche, wobei ein Stromsensor (10) mit dem Messwiderstand (2) in Serie geschaltet ist, um einen elektrischen Strom zu messen, der durch den Messwiderstand (2) fließt.

7. Temperatursensorschaltung (1) nach einem der vorhergehenden Ansprüche aufweisend eine Auswerteschaltung (11), welche dazu eingerichtet ist, die steuerbare Spannungsquelle (3) in Abhängigkeit einer von der Temperatursensorschaltung (1) Eingangsgröße zu regeln, um eine Anpassung der Eingangsspannung an die Eingangsgröße zu erreichen.

8. Temperatursensorschaltung (1) nach einem der vorhergehenden Ansprüche, wobei die steuerbare Spannungsquelle (3) oder Stromquelle (3) ein PWM-Modul (12) aufweist, welches an einen Dämpfungswiderstand (13) und einen Kondensator (14) angeschlossen ist, um aus einer konstanten Versorgungsspannung die Eingangsspannung zu erzeugen, wobei die Eingangsspannung durch eine Vorgabe einer Pulsweite für das PWM-Modul (12) geregelt wird.

9. Verfahren zur Durchführung einer Temperaturmessung mit einer Temperatursensorschaltung (1) nach einem der vorhergehenden Ansprüche, aufweisend die folgenden Schritte:
a) Bereitstellen eines Messstroms (15), der für die Temperaturmessung durch den Messwiderstand (2) strömt,
b) Bereitstellen eines erhöhten Messstroms (19), der für die Temperaturmessung durch den Messwiderstand (2) strömt in zumindest einem begrenzten Zeitintervall (20),
c) Bereitstellung eines Messsignals der Temperaturmessung, wobei für die Temperaturmessung während des begrenzten Zeitintervalls (20) aus Schritt b) eine erhöhte Messgenauigkeit angenommen wird
**dadurch gekennzeichnet, dass**
der durch die Temperatursensorschaltung hindurchfließende Strom durch Pulsen der variablen Spannungsversorgung derart eingestellt wird, dass die Eigenerwärmung des Sensors verringert und die Messgenauigkeit erhöht wird.

10. Verfahren nach Anspruch 9, zusätzlich umfassend folgende Schritte:
d) Erkennen einer Sensorerwärmung (17) in Folge des Messstroms (15),
e) Regeln von zumindest einem der folgenden Parameter in Abhängigkeit der in Schritt d) erkannten Erwärmung:
- Stärke des erhöhten Messstroms (19) in Schritt b),
- Stärke des Messstroms (15) in Schritt a),
- Länge des begrenzten Zeitintervalls (20) in Schritt b), und
- Wiederholrate von Schritt b).

11. Computerprogramm, welches zur Durchführung eines Verfahrens nach einem der Ansprüche 9 oder 10 eingerichtet ist.

12. Datenträger mit einem Computerprogramm gemäß Anspruch 11.

## Claims

1. Temperature sensor circuit (1) for measuring a temperature, comprising a measurement resistor (2) and a controllable voltage source (3) or current source (3) which is connected to the measurement resistor (2) and can be used to apply an input voltage to the measurement resistor (2), wherein the input voltage can be adjusted continuously using the controllable voltage source (3) or current source (3),
**characterized in that**
the current flowing through the temperature sensor circuit is adjusted by means of pulses of the variable voltage supply in such a manner that the self-heating of the sensor is reduced and the measurement accuracy is increased.

2. Temperature sensor circuit (1) according to Claim 1, also having a voltage divider resistor (4), with which the measurement resistor (2) is connected in series.

3. Temperature sensor circuit (1) according to one of the preceding claims, wherein a first connection (6) for reducing a first measurement voltage is at a first end (5) of the measurement resistor (2).

4. Temperature sensor circuit (1) according to one of the preceding claims, wherein a second connection (8) for reducing a second measurement voltage is at a second end (7) of the measurement resistor (2).

5. Temperature sensor circuit (1) according to Claim 3 or 4, wherein an analogue/digital converter (9) is connected to at least one connection (6, 8) for reducing a measurement voltage and can be used to convert a measurement voltage into a digital voltage signal.

6. Temperature sensor circuit (1) according to one of the preceding claims, wherein a current sensor (10) is connected in series with the measurement resistor (2) in order to measure an electrical current flowing through the measurement resistor (2).

7. Temperature sensor circuit (1) according to one of the preceding claims, having an evaluation circuit (11) which is configured to regulate the controllable voltage source (3) on the basis of an input variable from the temperature sensor circuit (1) in order to adapt the input voltage to the input variable.

8. Temperature sensor circuit (1) according to one of the preceding claims, wherein the controllable voltage source (3) or current source (3) has a PWM module (12) which is connected to a damping resistor (13) and a capacitor (14) in order to generate the input voltage from a constant supply voltage, wherein the input voltage is regulated by specifying a pulse width for the PWM module (12).

9. Method for carrying out a temperature measurement using a temperature sensor circuit (1) according to one of the preceding claims, having the following steps of:
a) providing a measurement current (15) which flows through the measurement resistor (2) for the temperature measurement,
b) providing an increased measurement current (19) which flows through the measurement resistor (2) for the temperature measurement in at least one limited interval of time (20),
c) providing a measurement signal of the temperature measurement, wherein an increased degree of measurement accuracy is assumed for the temperature measurement during the limited interval of time (20) from step b), **characterized in that**
the current flowing through the temperature sensor circuit is adjusted by means of pulses of the variable voltage supply in such a manner that the self-heating of the sensor is reduced and the measurement accuracy is increased.

10. Method according to Claim 9, additionally comprising the following steps of:
d) detecting sensor heating (17) as a result of the measurement current (15),
e) regulating at least one of the following parameters on the basis of the heating detected in step d) :
- intensity of the increased measurement current (19) in step b),
- intensity of the measurement current (15) in step a),
- length of the limited interval of time (20) in step b), and
- repetition rate of step b).

11. Computer program which is configured to carry out a method according to either of Claims 9 and 10.

12. Data storage medium having a computer program according to Claim 11.

## Revendications

1. Circuit formant capteur de température (1) destiné à mesurer une température, ledit circuit comprenant une résistance de mesure (2) et une source de tension (3) ou une source de courant (3) commandable qui est raccordée à la résistance de mesure (2) qui permet d'appliquer une tension d'entrée à la résistance de mesure (2), la tension d'entrée pouvant être réglée en continu à l'aide de la source de tension (3) ou de la source de courant (3) commandable,
**caractérisé en ce que**
le courant circulant dans le circuit formant capteur de température est réglé par des impulsions de l'alimentation en tension variable de manière à réduire l'échauffement propre du capteur et à augmenter la précision de mesure.

2. Circuit formant capteur de température (1) selon la revendication 1, ledit circuit comprenant en outre une résistance de division de tension (4) avec laquelle la résistance de mesure (2) est montée en série.

3. Circuit formant capteur de température (1) selon l'une des revendications précédentes, une première borne (6) destinée à la prise d'une première tension de mesure est située à une première extrémité (5) de la résistance de mesure (2).

4. Circuit formant capteur de température (1) selon l'une des revendications précédentes, une deuxième borne (8) destinée à la prise d'une deuxième tension de mesure étant située à une deuxième extrémité (7) de la résistance de mesure (2).

5. Circuit formant capteur de température (1) selon la revendication 3 ou 4, un convertisseur analogique-numérique (9), permettant de convertir une tension de mesure en un signal de tension numérique, étant raccordé à au moins une borne (6, 8) destinée à la prise d'une tension de mesure.

6. Circuit formant capteur de température (1) selon l'une des revendications précédentes, un capteur de courant (10) étant monté en série avec la résistance de mesure (2) afin de mesurer un courant électrique circulant à travers la résistance de mesure (2).

7. Circuit formant capteur de température (1) selon l'une des revendications précédentes, ledit circuit comportant un circuit d'évaluation (11) qui est conçu pour réguler la source de tension commandable (3) en fonction de l'une des grandeurs d'entrée du circuit formant capteur de température (1) afin d'adapter la tension d'entrée à la grandeur d'entrée.

8. Circuit formant capteur de température (1) selon l'une des revendications précédentes, la source de tension (3) ou la source de courant (3) commandable comportant un module PWM (12) qui est raccordé à une résistance d'amortissement (13) et à un condensateur (14) afin de générer la tension d'entrée à partir d'une tension d'alimentation constante, la tension d'entrée étant régulée par spécification d'une largeur d'impulsion destinée au module PWM (12).

9. Procédé de réalisation d'une mesure de température à l'aide d'un circuit formant capteur de température (1) selon l'une des revendications précédentes, ledit procédé comprenant les étapes suivantes :
a) fournir un courant de mesure (15) qui circule à travers la résistance de mesure (2) pour la mesure de la température,
b) fournir un courant de mesure augmenté (19) qui circule à travers la résistance de mesure (2) pour la mesure de la température pendant au moins un intervalle de temps limité (20),
c) fournir un signal de mesure pour la mesure de la température, une précision de mesure augmentée étant supposée à partir de l'étape b) pour la mesure de température pendant l'intervalle de temps limité (20) **caractérisé en ce que**
le courant circulant dans le circuit formant capteur de température est réglé par des impulsions de l'alimentation en tension variable de manière à réduire l'échauffement propre du capteur et à augmenter la précision de mesure.

10. Procédé selon la revendication 9, ledit procédé comprenant en outre les étapes suivantes :
d) détecter un échauffement de capteur (17) dû au courant de mesure (15),
e) réguler au moins un des paramètres suivants en fonction de l'échauffement détecté à l'étape d) :
- intensité du courant de mesure augmenté (19) à l'étape b),
- intensité du courant de mesure (15) à l'étape a),
- longueur de l'intervalle de temps limité (20) à l'étape b), et
- taux de répétition de l'étape b).

11. Logiciel qui est conçu pour mettre en œuvre un procédé selon l'une des revendications 9 et 10.

12. Support de données comprenant un logiciel selon la revendication 11.
